# EUROPEAN PATENT APPLICATION

(11) **EP 3 492 948 A1**
(43) Date of publication of application: **05.06.2019**
(21) Application number: 18206611.8
(22) Date of filing: 15.11.2018
(51) Int. Cl.: G01S 7/40, G01S 7/497, G01S 7/52, G01S 13/93

(54) **AUTOMATED VEHICLE SENSOR CALIBRATION SYSTEM**

(30) Priority: 29.11.2017 US 201762591951 P; 29.12.2017 US 201715857945
(71) Applicant: Aptiv Technologies Limited, St. Michael (BB)
(72) Inventor: AGARWAL, Divya, SUNNYVALE, CALIFORNIA 94086 (US); LAUR, Michael, H, MISSION VIEJO, CALIFORNIA 92692 (US); HILNBRAND, Brian, R, Mountain View, California 94043 (US)
(74) Representative: Manitz Finsterwald Patent- und Rechtsanwaltspartnerschaft mbB

(57) **Abstract**

A calibration system (10) and method (100) for calibrating a sensor (18) installed on a vehicle (12) includes a target (22) proximate to a travel-path (20) of a vehicle (12), a digital-map (24), the digital-map (24) configured to indicate a coordinate (26) of the target (22), a sensor (18) mounted on the vehicle (12), said sensor (18) configured to detect the target (22), and a controller (28) in communication with the digital-map (24) and the sensor (18). The controller (28) or the method (100) is configured to, in accordance with a determination that the target (22) is detected by the sensor (18), perform a calibration of the sensor (18). By using targets documented on a digital-map (24) to perform calibration, the vehicle (12) does not need to be taken to a specialized facility in order to be calibrated.

## Description

### TECHNICAL FIELD OF INVENTION

This disclosure generally relates to calibrating a sensor on a vehicle, and more particularly relates to means for sensor calibration to be performed during normal, everyday operation of the vehicle in a relatively uncontrolled environment, e.g. while operating on a public roadway.

### BACKGROUND OF INVENTION

It is known to calibrate a sensor on a vehicle in a well-controlled (e.g. laboratory) environment, or in a factory after the sensor is installed on the vehicle. However, once the vehicle is sold or deployed, it is inconvenient to take the vehicle to a calibration facility (e.g. a vehicle repair facility) to verify that the sensor is still meeting desired specifications.

### SUMMARY OF THE INVENTION

According to one embodiment, a calibration system for calibrating a sensor installed on a vehicle, comprises a target proximate to a travel-path of a vehicle; a digital-map, the digital-map configured to indicate a coordinate of the target; a sensor mounted on the vehicle, said sensor configured to detect the target; a controller in communication with the digital-map and the sensor, said controller configure to, in accordance with a determination that the target is detected by the sensor, perform a calibration of the sensor.
2. The controller may be configured, in accordance with a determination that the target is detected by the sensor and in accordance with a determination that the vehicle is proximate to the coordinate, to perform a calibration of the sensor.

The digital-map may indicate an expected-attribute of the target, and the controller determines a correction-factor in accordance with a determination that a detected-attribute of the target differs from the expected-attribute by more than a correction-thresho ld.

The digital-map may indicate an expected-attribute of the target, and the controller indicates that the sensor needs to be serviced in accordance with a determination that a detected-attribute of the target differs from the expected-attribute by more than a repair-threshold.

The sensor may include a first-device configured to indicate a first-direction to the target, a second-device configured to indicate a second-direction to the target, and the controller performs an alignment of the first-device and the second-device in accordance with a determination that the first-direction and the second-direction differ by more than a direction-threshold.

The controller may perform the calibration in accordance with a determination that a predefined-event has occurred.

The target may be characterized by a shape that corresponds to a pedestrian.

According to one embodiment, a controller for calibrating a sensor on a vehicle comprises: an input configured to receive a signal from a sensor; a processor configured to determine a coordinate of a target on a digital-map, determine when the vehicle is proximate to the target in accordance with the coordinate, and perform a calibration of the sensor in accordance with the signal and the coordinate in response to a determination that the target is detected by the sensor.

The processor may be configured to, in accordance with a determination that the vehicle is proximate to the coordinate and in accordance with a determination that the target is detected by the sensor, perform a calibration of the sensor.

The digital-map may indicate an expected-attribute of the target, and the controller is configured to determine a correction-factor in accordance with a determination that a detected-attribute of the target differs from the expected-attribute by more than a correction-threshold.

The digital-map may indicate an expected-attribute of the target, and the controller is configured to indicate that the sensor needs to be serviced in accordance with a determination that a detected-attribute of the target differs from the expected-attribute by more than a repair-threshold.

The sensor may include a first-device configured to indicate a first-direction to the target, a second-device different from the first-device, said second-device configured to indicate a second-direction to the target, and the controller is configured to perform an alignment of the first-device and the second-device in accordance with a determination that the first-direction and the second-direction differ by more than a direction-threshold.

The controller may be configured to perform the calibration in accordance with a determination that a predefined-event has occurred.

According to one embodiment, a method of calibrating a sensor mounted on a vehicle comprises:
receiving from the sensor an indication of the sensor detecting a target; and
performing, by a controller in communication with a sensor mounted on a vehicle and in accordance with a determination that the sensor detected the target, a calibration of the sensor.

The method may include:
determining, by the controller in communication with a digital-map, that the vehicle is proximate to a coordinate of the target;
performing, by the controller and in accordance with a determination that the sensor detected the target and that the vehicle is proximate to the coordinate , a calibration of the sensor.

The method may include:
accessing a digital-map, said digital-map configured to indicate a coordinate of a target proximate to a travel-path of the vehicle;

The method may include:
determining, by the controller in communication with a digital-map, that the vehicle is proximate to a coordinate of the target;
performing, by a controller in communication with a sensor mounted on a vehicle and in accordance with a determination that the sensor detected the target and that the vehicle is proximate to the coordinate, a calibration of the sensor.

The method may include:
retrieving an expected-attribute of the target from the digital-map; and
determining a correction-factor in response to a determination that a detected-attribute of the target differs from the expected-attribute by more than a correction-thresho ld.

The method may include:
retrieving an expected-attribute of the target from the digital-map; and
indicating that the sensor needs repair in response to a determination that a detected-attribute of the target differs from the expected-attribute by more than a repair-threshold.

The method may include:
performing the calibration in response to a determination that a predefined-event has occurred.

According to one embodiment, a system comprises a target, the target positioned in space proximate a travel-path of a vehicle; a digital map, the digital map indicating the travel-path and an indicated-coordinate of the target positioned in space proximate the travel path; a sensor, mounted on the vehicle, the sensor detecting a detected-coordinate of the target positioned in space; and a processor, the processor in communication with the sensor, the processor determining a difference between the indicated-coordinate and the detected-coordinate, and in accordance with a determination that the difference is greater than a predetermined-threshold, performing a calibration of the sensor.

According to another embodiment, a system comprises a vehicle; a map, the map indicating a travel-path of the vehicle and at least one coordinate of a target positioned in space proximate the travel path; a sensor mounted on the vehicle, the sensor detecting at least one coordinate of the target positioned in space proximate the travel path as the vehicle travels along the travel path; and a processor, the processor in communication with the sensor, the processor determining a difference between the at least one coordinate indicated by the map and the at least one coordinate detected by the sensor, and in accordance with a determination that the difference is greater than a predetermined-threshold, performing a calibration of the sensor.

According to one embodiment, a controller comprises one or more processors; memory; and one or more programs stored in memory, the one or more programs including instructions for performing the method of calibrating a sensor mounted on a vehicle.

According to one embodiment, a non-transitory computer-readable storage medium comprises one or more programs for execution by one or more processors of a controller, the one or more programs including instructions which, when executed by the one or more processors, cause the controller to perform the method of calibrating a sensor mounted on a vehicle.

### BRIEF DESCRIPTION OF DRAWINGS

The present invention will now be described, by way of example with reference to the accompanying drawings, in which:
Fig. 1 is a diagram of calibration system in accordance with one embodiment;
Fig. 2 is a scenario encountered by the system of Fig. 1 in accordance with one embodiment; and
Fig. 3 is a flowchart of a method of operating the system of Fig. 1 in accordance with one embodiment.

### DETAILED DESCRIPTION

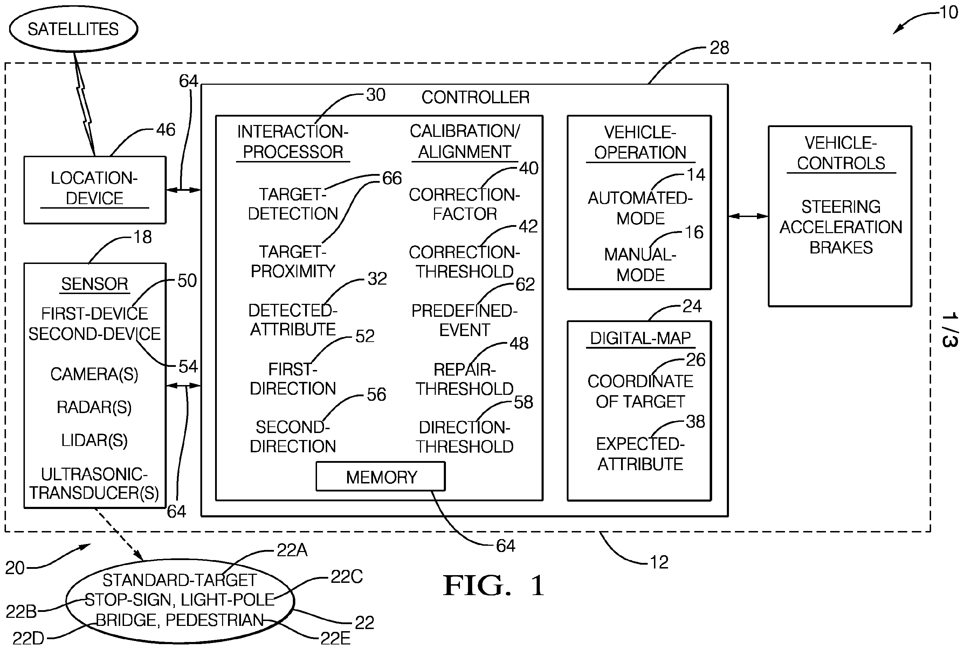

Fig. 1 illustrates a non-limiting example of a calibration system 10, hereafter referred to as the system 10, which is generally intended for calibrating a sensor 18, e.g. one or more instances of camera, lidar, radar, ultrasonic-transducer, any combination thereof, that is/are installed on an automated-vehicle, hereafter referred to as the vehicle 12. As used herein, the term automated-vehicle may apply to instances when the vehicle 12 is being operated in an automated-mode 14, i.e. a fully autonomous mode, where a human-operator (not shown) of the vehicle 12 may do little more than designate a destination to operate the vehicle 12. However, full automation is not a requirement. It is contemplated that the teachings presented herein are useful when the vehicle 12 is operated in a manual-mode 16 where the degree or level of automation may be little more than providing an audible or visual warning/instruction to the human-operator who is generally in control of the steering, accelerator, and brakes of the vehicle 12.

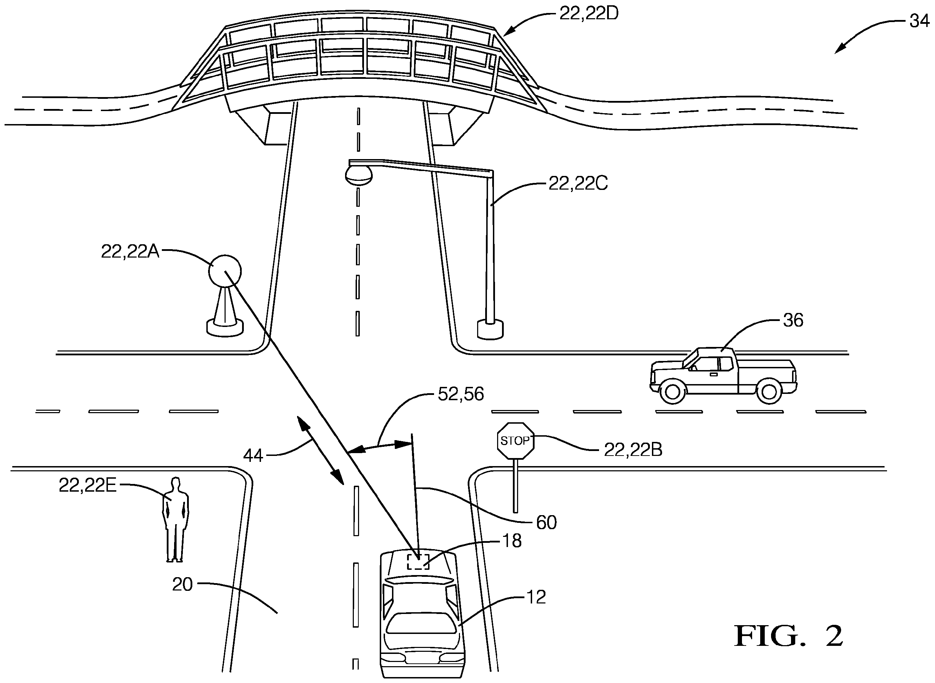

As will be explained in more detail below, the system 10 described herein is advantageous over prior vehicle perception-sensor calibration systems that required the calibration of the sensor 18, i.e. the calibration of sensors or devices that form the sensor 18, be performed at a specialized facility such as a laboratory, vehicle repair facility, or vehicle assembly facility. The system 10 described herein can perform calibration of the sensor 18 during normal operation, i.e. while the vehicle 12 is being operated on a public roadway. This capability advantageously avoids vehicle down-time for a special calibration process. The system 10 provides for this advantage by providing one or more documented instances of a target 22 proximate to a travel-path 20 (see also Fig. 2) of the vehicle 12. As used herein, the calibration process may be limited to verifying that the sensor still meets the desired specification. However, it is also contemplated that the calibration process may include making an adjustment to the sensor 18, and/or determining (i.e. calculating) some coefficient or offset value that is applied to a signal or data received from the sensor 18. It is also contemplated that the target 22 may be constantly verified for correctness to account for any errors caused by, but not limited to, weather.

The target 22 may be any object that has a fixed position and documented detection characteristics. In one embodiment of the system 10, the target 22 is a standard-target 22A that is engineered or designed specifically for calibration of a sensor. A non-limiting example of a known standard-target that has no other particularly useful function is a metal sphere used for calibration of marine radars. Alternatively, the target 22 may be a common object such as a stop-sign 22B, light-pole 22C that supports a roadway-light or traffic-signal, or a bridge 22D that passes over the travel-path 20. In one embodiment, the target 22 is characterized by a shape that corresponds to a pedestrian 22E. The shape may be presented to the sensor 18 using a two-dimensional (2D) silhouette or a three-dimensional (3D) mannequin that may be adult or child sized or both. The 2D silhouette may be formed of a sheet of wood or plastic, optionally painted or coated with radar and/or lidar reflective material, e.g. reflective paint with metal particles. The 3D mannequin may be a plastic shell in the shape of a human and this shell may be filled with water, and optionally coated with a radar and/or lidar reflective material.

It is desirable for the target 22 to have a documented and reliable detection characteristic for the type of sensor or device being calibrated, e.g. camera, lidar, radar, or ultrasonic-transducer. For example, if the radar is being calibrated, the target 22 should have a consistent and reliable radar reflection characteristic, i.e. a consistent radar-cross-section or RCS. Similarly, if the lidar is being calibrated, the target 22 should have a documented shape and a surface treatment that provides for a consistent and repeatable infrared laser-beam reflection characteristic. For calibration of a camera, the size, shape, color, IR and visible light reflectivity characteristics should be documented and reliable. Weather conditions may also be documented as calibration values can be different for various weather conditions, a sunny versus a cloudy day for example. Whatever is selected be designated as the target 22, it should be proximate to (e.g. within 50m of) the travel-path 20, which may be a public roadway, parking-lot, fuel-station, or other area traveled by the vehicle 12. It is also contemplated that the target 22 may be in a home driveway or at a home garage where the vehicle 12 is stored so that calibration of the sensor 18 is performed regularly.

The system includes a digital-map 24. The digital-map 24 may be a two-dimensional (2D) type of map commonly displayed by navigation-devices, or a three-dimensional (3D) model of environment around the vehicle 12. The digital-map 24 may be stored within the vehicle 12, or stored in the cloud and remotely accessed from the vehicle 12, or combination thereof. If all or part of the digital-map 24 is stored in the cloud, the digital-map 24 may be accessed using Wi-Fi or a cellular connection. Alternatively, the digital-map 24 or information relevant to the digital-map 24 may be broadcast or transmitted locally from or by the target 22 using dedicated-short-range-communications (DSRC). The digital-map 24 or the broadcast information may indicate or specifies a coordinate 26 of the target 22. The coordinate 26 may be expressed in terms of latitude, longitude, and elevation world coordinates, or be expressed in terms of relative position to some reference object such as a road-marking or another instance of the target 22.

The digital-map 24, in any of the aforementioned configurations (stored and retrieved from memory, or independently transmitted signals from/by/for the target 22), may also indicate recommended settings for the sensor 18 to better test and calibrate the sensor 18. It is further contemplated that the nearby presence of an instance of the target 22 can be advertised or indicated by posting a quadratic residue code (QR code) on or near an instance of the target 22, whereby the internet is accessed to retrieve the coordinate 26 and any other information relevant for using the target 22 to calibrate the sensor 18. As used herein, any reference to the digital-map 24 is intended to include information stored in the digital-map 24, independently broadcast information, information retrieved from the internet, or any other source of information relevant defining any characteristic of the target 22.

The sensor 18 may comprise, consist of, or be formed of, one or more instances of various known devices such as a camera, a lidar, a radar, an ultrasonic-transducer, or any combination thereof including multiples of a kind of device. The various devices may be co-located in a unified housing, or be distributed and mounted at any location on the vehicle 12. Each instance of device included in the sensor 18 may have a ridged or fixed mounting on the vehicle 12, or an adjustable mounting that provides for a variable boresight or direction with respect to the vehicle 12. That is, some or all devices that compose the sensor 18 may include servos or other mechanisms that can be used to vary the direction or boresight of the device relative to the vehicle 12 to better detect (e.g. render an image or detect reflected radar/lidar emissions) the target 22.

The system 10 includes a controller 28 in communication with the digital-map 24 and the sensor 18. The communication may be by way of wires, optical fiber, or wireless communications as will be recognized by those in the art. The controller 28 may include an input 64 such as an analog-filter or a digital-port configured to receive one or more signals from the sensor 18 as will be recognized by those in the art. The controller 28 may include a processor 30 such as a microprocessor or other control circuitry such as analog and/or digital control circuitry including an application specific integrated circuit (ASIC) for processing data as should be evident to those in the art. The controller 28 or the processor 30 may include memory 64, including non-volatile memory, such as electrically erasable programmable read-only memory (EEPROM) for storing one or more routines, thresholds, and captured data. The one or more routines may be executed by the processor 30 to perform steps for determining that calibration of the sensor 18 is advisable based on signals received by the controller 28 as described herein. The controller 28 may also include analog and/or digital circuitry necessary to interface with sensor 18.

The controller 28 or the processor 30 is advantageously configured (e.g. programmed) to, in accordance with a determination that the vehicle 12 is proximate to (e.g. within 50 meters of) the coordinate 26 of the target 22, and optionally in accordance with a determination that the target 22 is detected by the sensor 18, perform a calibration of the sensor 18. That is, when the sensor 18 is relatively close to the target 22, and/or when the target 22 is detected by the sensor 18, the system 10 performs a calibration of the sensor 18 using information from the digital-map 24 related to the target 22. As will be explained in more detail below, the calibration of the sensor 18 may be based on comparing one or more attributes or characteristics of the target 22, hereafter referred to as the detected-attribute 32 that is/are indicated by sensor 18.

By way of example and not limitation, the detected-attribute 32 may include, but is not limited to: distance-to-target, direction-to-target, radar/lidar return signal strength, radar indicated size of the target 22, lidar point-cloud indicated size of the target 22, image size, target color, and/or target image-intensity with respect to ambient light. As will be explained in more detail below, the values of the detected-attribute 32 will be used to determine if/when it is advisable or necessary to adjust or repair the sensor 18. By way of further example and not limitation, the adjustment to the sensor 18 may be by way of adjusting a calibration-coefficient or correction-factor of one or more of the devices that form the sensor 18. The application of a calibration-coefficient or correction-factor to data from the sensor 18 may be performed by the controller 28 or the processor 30. Non-limiting examples of a calibration-coefficient or correction-factor include, but are not limited to: a gain-value, an offset-value, a location based correction-factor, a contrast-characteristic, and the like, which may be varied or adjusted to, for example, bring the sensor 18 into specification.

Fig. 2 illustrates a non-limiting example of a scenario 34 where the vehicle 12 is traveling on a non-limiting example of the travel-path 20 (e.g. a roadway), and there are multiple instances of the target 22 available to use for calibrating the sensor 18. An instance of an other-vehicle 36 is an example of something that is not a preferred example of an instance of the target 22. The other-vehicle 36 is not preferred as it does not necessarily have a fixed position, so the other-vehicle 36 is not as easy to use to calibrate the sensor 18 as are the instances of the target 22 which have fixed positions. It is contemplated that in most situations, most objects detected by the sensor 18 will not be instances of the target 22. That the opposite appears to be the case in Fig. 1 is only to simplify the illustration.

Continuing to refer to Figs. 1 and 2, the digital-map 24 is configured to indicate or provide an expected-attribute 38 of the target 22. As used herein, the expected-attribute 38 is generally some value or characteristic of the target 22 that is indicated by a properly calibrated example of the sensor 18, e.g. a reference-sensor (not shown) that detected the target 22 at some prior time. The expected-attribute 38 is provided by the digital-map 24 and is compared to the detected-attribute 32 to determine if the sensor 18 is operating properly, i.e. is operating in accordance with the specifications of the sensor 18 or device in question. Non-limiting examples of the expected-attribute 38 may correspond to those non-limiting examples of the detected-attribute 32 provided above. If the values of the detected-attribute 32 and the expected-attribute 38 are close enough, i.e. differ by less than some threshold, then the system 10 may take no action, e.g. may not perform a calibration of the sensor 18.

However, if the detected-attribute 32 and the expected-attribute 38 differ by more than or greater than some threshold, then the system 10 is configured to take some action. In one embodiment, controller 28 determines a correction-factor 40 (i.e. a calibration-coefficient) in accordance with a determination that a detected-attribute 32 of the target 22 differs from the expected-attribute 38 by more than a correction-threshold 42. That is, the correction-factor 40 is determined and subsequently used to compensate or correct data from the sensor 18 so a subsequently determined value of the detected-attribute 32 better match the expected-attribute 38 of the target 22.

By way of a non-limiting example, the detected-attribute 32 and the expected-attribute 38 may be based on a distance 44 (Fig. 2) between the sensor 18 and the target 22, e.g. the standard-target 22A, indicated by the radar. To enable such as comparison, the system 10 includes a location-device 46, e.g. a global-position-system (GPS) receiver, that is mounted on the vehicle 12. The expected-attribute 38 is then the GPS coordinate of the target 22, which is compared to a coordinate indicated by the location-device 46 to determine a GPS indicated distance. The GPS indicated distance is compared to the radar indicated distance to the target 22, and if those distances (GPS indicated vs. radar indicated) to the target 22 differs by more than the correction-threshold 42, more than five-percent (5%) for example, then the system 10 or the controller 28 or the processor 30 is configured to determine the value of the correction-factor 40 necessary for the GPS indicated distance to the target 22 to match the radar indicated distance to the target 22.

Other non-limiting examples of characteristics or attributes (the detected-attribute 32 and the expected-attribute 38) that could be used to check the sensor 18 include, but are not limited to: a direction to the target 22 differs by more than two degrees (> 2°), a radar/lidar return signal strength differs by more than ten percent (>10%), a radar indicated size differs by more than ten percent (>10%), lidar point-cloud size differs by more than ten percent (>10%), image size differs by more than two percent (>2%), and/or image color differs by more than ten percent (>10%). It is also contemplated that the various thresholds may be varied in accordance with or based on weather, time of day, ambient light, dwell time of the sensor 18 on the target 22, speed of vehicle 12, detected partial blockage of a line of sight between the sensor 18 and the target 22.

It is expected that the sensor 18 could become damaged in a way that it is not possible or desirable to correct a difference between the detected-attribute 32 and the expected-attribute 38 using the correction-factor 40. That is, it is expected that situations may occur when sensor 18 needs to be repaired or replaced or serviced. Accordingly, the controller 28 or the processor 30 may be configured to indicate that the sensor 18 needs to be serviced (includes adjust, repair, and replace options) in accordance with a determination that the detected-attribute 32 of the target 22 differs from the expected-attribute 38 by more than a repair-threshold 48. By way of a non-limiting example, the repair-threshold 48 may be some multiple of the correction-threshold 42, 1.5x, 2x, or 3x of the correction-threshold 42. It is also contemplated that the vehicle 12 may be operated at some reduced capacity (e.g. reduced speed, greater following distances, and/or other extra safety margins) until the sensor 18 is repaired.

Vehicle sensors 18 may also receive independently transmitting signals from the target 22 with an associated meta data stream indicating characteristics of the signal including clock information. The independently transmitting and receiving instance of the target 22 may also receive information from the vehicle to request an alteration of the characteristics of the transmitting signal to allow for a more controlled and extended test to calibrate the vehicle sensors.

It is also expected that one device of the sensor 18 may become misaligned with respect to another device of the sensor 18, and realignment, electronic and/or mechanical realignment, may be advisable or necessary. That is, the sensor 18 may include a first-device 50 (lidar, radar, camera, or ultrasonic) that indicates a first-direction 52 (azimuth-angle and/or elevation-angle) to the target 22, and a second-device 54 (same or differ type as first-device 50) indicating a second-direction 56 to the target 22. The first-direction 52 and the second-direction 56 may be indicated as a compass heading, or as an angle relative to a boresight 60 (Fig. 2) of the sensor 18, or an angle relative to the boresights of the respective devices. That the first-direction 52 and the second-direction 56 are shown as the same angle in Fig. 2 in only to simplify the drawing and not intended to suggest that there is no misalignment of the first-device 50 with respect to the second-device 54. It is noted that the boresight 60 of the sensor 18 may be aligned with a longitudinal-axis (not shown) of the vehicle 12. Accordingly, the controller 28 or the processor 30 may be configured to perform an alignment of the first-device 50 and the second-device 54 in accordance with a determination that the first-direction 52 and the second-direction 56 differ by more than a direction-threshold 58.

It may also be advisable to perform a calibration on a regular basis and/or when conditions are detected that make calibration advisable. Accordingly, the controller 28 or the processor 30 may be configured to perform a calibration in accordance with a determination that a predefined-event 62 has occurred. By way of example and not limitation, the predefined-event 62 may be based on an accumulation of various events since prior calibration such as, but not limited to: time, distance traveled, change in temperature, cumulative vibration, mechanical-shock-event that subjects the sensor 18 to mechanical-shock greater than a mechanical-shock-threshold. The predefined-event 62 may also be considered in combination with a detected difference between the detected-attribute 32 and the expected-attribute that does not exceed the correction-threshold 42.

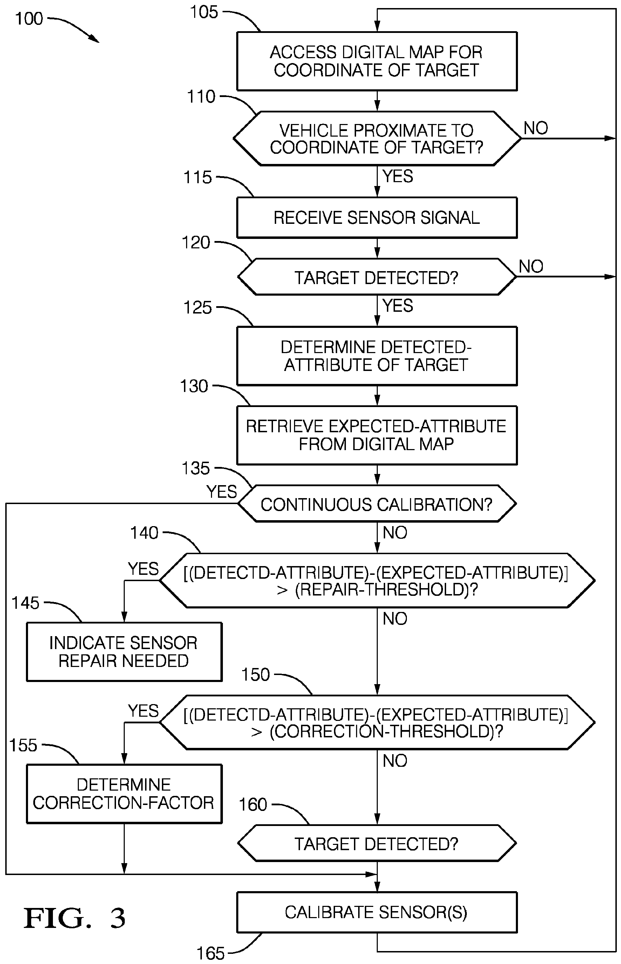

Fig. 3 illustrates a non-limiting example of a method 100 of calibrating the sensor 18 (Fig. 1) mounted on the vehicle 18.

Step 105, ACCESS DIGITAL-MAP FOR COORDINATE OF TARGET, may include the controller 28 or the processor 30 periodically comparing the coordinate of the vehicle 12 indicated by the location-device 46 to nearby instances of the target 22 indicated on the digital-map 24. As such, the method 100 may include the step of accessing the digital-map 24, which is configured to indicate the coordinate 26 (absolute coordinate or relative coordinate with respect to another object/target) of the target 22 proximate to the travel-path 20 of the vehicle 12.

Step 110, VEHICLE PROXIMATE TO COORDINATE OF TARGET?, determines when an instance of the target is within a distance-threshold, fifty meters (50m) for example. If there are no instances of the target 22 within the distance-threshold (NO), then the method returns to step 105 to continue searching for a suitable instance of the target 22. If there is an instance of the target 22 within the distance-threshold (YES), then the sensor 18 is monitored to determine if the instance of the target 22 is detected by the sensor 18. As such, the method 100 may include determining, by the controller 28 or the processor 30 that are in communication with the digital-map 24 (recalled from local memory 64 or accessed via internet connection), that the vehicle 12 is proximate to a coordinate 26 of the target 22.

Step 115, RECEIVE SENSOR SIGNAL, may include processing a signal or data received at the input 64, and receiving from the sensor 18 an indication of the sensor 18 detecting an instance of the target 22.

Step 120, TARGET DETECTED?, may include the controller 28 or the processor 30 making a determination that the target 22 indicated by the digital-map 24 has indeed been detected by the sensor 18. The determination that the target 22 has been detected may also include a determination that some aspect of the signal from the sensor 18 is above a detection-threshold so that, for example, the signal-to-noise ratio is sufficient for reliable calibration of the sensor 18.

Step 125, DETERMINE DETECTED-ATTRIBUTE OF TARGET, may include processing signals or data received from the sensor 18, and determining which portion or aspect of that signal or data is related to the target 22. For example, if the data is from a camera, the image rendered by the camera is processed so the portion of the image that represents the target 22 is identified. From that portion, the detected-attribute 32 (e.g. color, brightness, size, etc.) of the target 22 in the image can be determined

Step 130, RETRIEVE EXPECTED-ATTRIBUTE FROM DIGITAL-MAP, may include retrieving the expected-attribute 38 of the target 22 from the digital-map 24 that corresponds with the detected-attribute from the previous step.

Step 135, CONTINUOUS CALIBRATION?, is an optional step that allows for the method 100 to perform a calibration of the sensor 18 even if there is no evidence that performing a calibration is advisable. That is, the system 10 may be optionally configured to perform a calibration of the sensor at ever instance of the target 22 being detected.

Step 140, |(DETECTED-ATTRIBUTE) - (EXPECTED-ATTRIBUTE) |> (REPAIR-THRESHOLD), is a test performed to determine if the sensor needs to be repaired or replaced, or otherwise adjusted because the absolute difference between the detected-attribute 32 and the expected-attribute 38 is greater than the repair-threshold 48. It is contemplated that the repair-threshold 48 will be greater than the correction-threshold 42 of step 150 because the error cannot be electronically corrected. However, there may be some attributes where the repair-threshold 48 is equal to the correction-threshold 42 or is the only threshold because the problem cannot be fixed electronically. If the absolute difference between the detected-attribute 32 and the expected-attribute 38 is greater than the repair-threshold 48 (YES) then the method proceeds to step 145. Otherwise (NO) the method proceeds to step 150.

Step 145, INDICATE SENSOR REPAIR NEEDED, may include displaying on a display in the vehicle 12 that the sensor 18 needs to be serviced. If the vehicle 12 is being operated in the automated-mode 14 (i.e. autonomous/driverless mode) step 145 may also include taking the necessary steps to change the behavior the vehicle to offset the perception sensing degradation due to the sensor 18 needing repair or replacement. As such, the method 100 may include indicating that the sensor 18 needs repair in response to a determination that a detected-attribute 32 of the target 22 differs from the expected-attribute 38 by more than a repair-threshold 48.

Step 150, |(DETECTED-ATTRIBUTE) - (EXPECTED-ATTRIBUTE) |> (CORRECTION-THRESHOLD), is a test performed to determine if the sensor needs to be electronically adjusted or compensated for because the absolute difference between the detected-attribute 32 and the expected-attribute 38 is greater than the correction-threshold 42, but likely less than the repair-threshold 48. That the adjustment or compensation is performed electronically is intended to convey that system 10 can perform some self-correction. For example, the sensor 18 or an instance of the device that forms the sensor may include mechanical servos or similar devices that allow for the sensor 18 or device thereof to be aligned. Alternatively, calibration-coefficients used in algorithms that process the signal or data from the sensor 18 may be adjusted to minimize or eliminate the absolute difference between the detected-attribute 32 and the expected-attribute 38. If the absolute difference between the detected-attribute 32 and the expected-attribute 38 is greater than the correction-threshold 42 (YES) then the method proceeds to step 155. Otherwise (NO) the method proceeds to step 160.

Step 155, DETERMINE CORRECTION-FACTOR, may include determining a correction-factor 40 in response to a determination that a detected-attribute 32 of the target 22 differs from the expected-attribute 38 by more than a correction-threshold 42.

Step 160, PREDEFINED-EVENT OCCURRED?, may include performing a calibration on a regular basis and/or when conditions make calibration advisable. For example, performing the calibration in response to a determination that a predefined-event 62 has occurred.

Step 165, CALIBRATE SENSOR(S), may include performing, by the controller 28 or the processor 30 which is in communication with the sensor 18 mounted on the vehicle 12 and in accordance with a determination that the sensor 18 detected the target 22, a calibration of the sensor 18. That is, the calibration may occur any time a target is detected, regardless of any detected difference between the what the digital-map 24 indicates about the target 22 and the sensor 18 detects about the target 22. Alternatively, step 165 may include performing, by the controller and in accordance with a determination that the sensor detected the target 22 and that the vehicle 12 is proximate to the coordinate 26, a calibration of the sensor 18. That is, the calibration is performed when both the target 22 is detected and the vehicle 12 is close enough to the target 22 for calibration of sensor 18 to occur.

In another embodiment, the system 10 includes a target 22 positioned in space proximate a travel-path 20 of a vehicle 12; a digital-map 24 indicating the travel-path 20 and an indicated-coordinate 26 of the target 22 positioned in space proximate the travel path; a sensor 18, mounted on the vehicle 12, the sensor 18 detecting a detected-coordinate 26 of the target 22 positioned in space; and a processor 30, the processor 30 in communication with the sensor 18. The processor 30 is determining a difference between the indicated-coordinate 26 and the detected-coordinate 26, and in accordance with a determination that the difference is greater than a predetermined-threshold, performing a calibration of the sensor 18.

In another embodiment, the system 10 includes a vehicle 12; a map 24, the map 24 indicating a travel-path 20 of the vehicle 12 and at least one coordinate 26 of a target 22 positioned in space proximate the travel-path 20; a sensor 18 mounted on the vehicle 12, the sensor 18 detecting at least one coordinate 26 of the target 22 positioned in space proximate the travel path as the vehicle 12 travels along the travel path; and a processor 30, the processor 30 in communication with the sensor 18. The processor 30 is determining a difference between the at least one coordinate 26 indicated by the map and the at least one coordinate 26 detected by the sensor 18, and in accordance with a determination that the difference is greater than a predetermined-threshold, performing a calibration of the sensor 18.

In another embodiment, a controller 28 includes one or more processors 30; memory 64; and one or more programs 66 (e.g. a program for target-detection and a program for determining target-proximity) stored in memory 64, the one or more programs 66 including instructions for performing the method 100.

In another embodiment, a non-transitory computer-readable storage medium (e.g. the memory 64 and/or the processor 30) includes one or more programs 66 for execution by one or more processors of a controller 28, the one or more programs including instructions which, when executed by the one or more processors, cause the controller 28 to perform the method 100.

Accordingly, a calibration system (the system 10), a controller 28 for the system 10, a processor 30 for the system, and a method 100 of operating the system 10 are provided. The system 10, the controller 28, the processor 30, and the method 100 are all advantageous as the sensors 18 on the vehicle 12 can be calibrated without going to a specially designed facility.

While this invention has been described in terms of the preferred embodiments thereof, it is not intended to be so limited, but rather only to the extent set forth in the claims that follow.

## Claims

1. A controller (28) for calibrating a sensor (18) on a vehicle (12), said controller (28) comprising:
an input (64) configured to receive a signal from a sensor (18);
a processor (30) configured to determine a coordinate (26) of a target (22) on a digital-map (24), determine when the vehicle (12) is proximate to the target (22) in accordance with the coordinate (26), and perform a calibration of the sensor (18) in accordance with the signal and the coordinate (26) in response to a determination that the target (22) is detected by the sensor (18).

2. The controller (28) in accordance with claim 1, wherein said processor (30) is configure to, in accordance with a determination that the vehicle (12) is proximate to the coordinate (26) and in accordance with a determination that the target (22) is detected by the sensor (18), perform a calibration of the sensor (18).

3. The controller (28) in accordance with any one of the preceding claims, wherein the digital-map (24) indicates an expected-attribute (38) of the target (22), and the controller (28) is configured to determine a correction-factor (40) in accordance with a determination that a detected-attribute (32) of the target (22) differs from the expected-attribute (38) by more than a correction-threshold (42).

4. The controller (28) in accordance with any one of the preceding claims, wherein the digital-map (24) indicates an expected-attribute (38) of the target (22), and the controller (28) is configured to indicate that the sensor (18) needs to be serviced in accordance with a determination that a detected-attribute (32) of the target (22) differs from the expected-attribute (38) by more than a repair-threshold (48).

5. The controller (28) in accordance with any one of the preceding claims, wherein the sensor (18) includes a first-device (50) configured to indicate a first-direction (52) to the target (22), a second-device (54) different from the first-device (50), said second-device (54) configured to indicate a second-direction (56) to the target (22), and the controller (28) is configured to perform an alignment of the first-device (50) and the second-device (54) in accordance with a determination that the first-direction (52) and the second-direction (56) differ by more than a direction-threshold (58).

6. A calibration system (10) for calibrating a sensor (18) installed on a vehicle (12), comprising the controller (28) of any one of the preceding claims, said system (10) comprising:
the target (22) proximate to a travel-path (20) of the vehicle (12);
the digital-map (24) configured to indicate a coordinate (26) of the target (22);
the sensor (18) mounted on the vehicle (12), said sensor (18) configured to detect the target (22);
the controller (28) in communication with the digital-map (24) and the sensor (18), said controller (28) configure to, in accordance with a determination that the target (22) is detected by the sensor (18), perform a calibration of the sensor (18).

7. The system (10) in accordance with claim 6, wherein said controller (28) configured to, in accordance with a determination that the target (22) is detected by the sensor (18) and in accordance with a determination that the vehicle (12) is proximate to the coordinate (26), perform a calibration of the sensor (18).

8. The system (10) in accordance with any one of the claims 6 or 7, wherein the digital-map (24) indicates an expected-attribute (38) of the target (22), and the controller (28) determines a correction-factor (40) in accordance with a determination that a detected-attribute (32) of the target (22) differs from the expected-attribute (38) by more than a correction-threshold (42).

9. The system (10) in accordance with any one of the claims 6 to 8, wherein the digital-map (24) indicates an expected-attribute (38) of the target (22), and the controller (28) indicates that the sensor (18) needs to be serviced in accordance with a determination that a detected-attribute (32) of the target (22) differs from the expected-attribute (38) by more than a repair-threshold (48).

10. The system (10) in accordance with any one of the claims 6 to 9, wherein the sensor (18) includes a first-device (50) configured to indicate a first-direction (52) to the target (22), a second-device (54) configured to indicate a second-direction (56) to the target (22), and the controller (28) performs an alignment of the first-device (50) and the second-device (54) in accordance with a determination that the first-direction (52) and the second-direction (56) differ by more than a direction-threshold (58).

11. The system (10) in accordance with any one of the claims 6 to 10, wherein the controller (28) performs the calibration in accordance with a determination that a predefined-event (62) has occurred.

12. A method (100) of operating the calibration system (10) of any one of the claims 6 to 11, said method (100) comprising:
receiving (115) from the sensor (18) an indication of the sensor (18) detecting the target (22); and
performing (165), by the controller (28) in communication with the sensor (18) mounted on the vehicle (12) and in accordance with a determination (120) that the sensor (18) detected the target (22), the calibration of the sensor (18).

13. The method (100) in accordance with claim 12, wherein the method (100) includes
determining (110), by the controller (28) in communication with the digital-map (24), that the vehicle (12) is proximate to a coordinate (26) of the target (22);
performing (165), by the controller (28) and in accordance with a determination (110) that the sensor (18) detected the target (22) and that the vehicle (12) is proximate to the coordinate (26), the calibration of the sensor (18).

14. The method (100) in accordance with any one of the claims 12 or 13, wherein the method (100) includes
accessing (105) the digital-map (24), said digital-map (24) configured to indicate a coordinate (26) of the target (22) proximate to the travel-path (20) of the vehicle (12).

15. The method (100) in accordance with any one of the claims 12 to 14, wherein the method (100) includes
performing (165) the calibration in response to a determination (160) that a predefined-event (62) has occurred.
